# EUROPEAN PATENT SPECIFICATION

(11) **EP 2 613 478 B1**
(45) Date of publication and mention of the grant of the patent: **07.08.2019**
(21) Application number: 11821038.4
(22) Date of filing: 20.06.2011
(51) Int. Cl.: H04L 12/709

(54) **METHOD AND DEVICE FOR LINK AGGREGATION**
VERKNÜPFUNGSAGGREGATIONSVERFAHREN UND -VORRICHTUNG
PROCÉDÉ ET DISPOSITIF D'AGRÉGATION DE LIAISONS

(30) Priority: 03.09.2010 CN 201010275509
(43) Date of publication of application: 10.07.2013
(73) Proprietor: ZTE Corporation, Shenzhen, Guangdong 518057 (CN)
(72) Inventor: CHEN, Jian, Shenzhen Guangdong 518057 (CN); YE, Ao, Shenzhen Guangdong 518057 (CN); MA, Miaomiao, Shenzhen Guangdong 518057 (CN); DU, Xiangwen, Shenzhen Guangdong 518057 (CN)
(74) Representative: Lavoix
(86) International application number: PCT/CN2011/075970
(87) International publication number: WO 2012/028012

(56) References cited:
- CN-A- 101 094 157
- CN-A- 101 547 082
- CN-A- 101 945 042
- US-A1- 2005 265 330
- "Link Aggregation Control Protocol Protocol Participants Protocol Machines ; seaman_1_1198", IEEE DRAFT; SEAMAN_1_1198, IEEE-SA, PISCATAWAY, NJ USA, vol. 802.3, 8 November 1998 (1998-11-08), pages 1-11, XP017618494, [retrieved on 1998-11-08]
- "Link Aggregation Control Protocol ; seaman_1_090198", IEEE DRAFT; SEAMAN_1_090198, IEEE-SA, PISCATAWAY, NJ USA, vol. 802.3ad, 2 September 1998 (1998-09-02), pages 1-11, XP068013083, [retrieved on 1998-09-02]
- HEWLETT PACKARD: "Dynamic LACP Trunking", INTERNET CITATION, 2000, XP002284776, Retrieved from the Internet: URL:http://www.hp.com/rnd/support/config_e xamples/2524_lacp.pdf [retrieved on 2004-06-16]

## Description

### TECHNICAL FIELD

The disclosure relates to the field of network communications, in particular to a method and a device for link aggregation.

### BACKGROUND

A Link Aggregation Control Protocol (LACP) is a protocol for implementing dynamic link aggregation. LACP aggregates one or more links together to form a link TRUNK, such that a Media Access Control (MAC) application layer can treat the link TRUNK as one single link. After a link is added to a link TRUNK, an application message can be transmitted only after the data frame transmitting-receiving function of ports at both ends of an aggregated link in the link TRUNK are turned on, otherwise the application message may be lost.

There are six state machines included in the LACP, namely, a Receive machine, a Periodic Transmission machine, a Selection Logic machine, a Mux machine, a Transmit machine, and a Churn Detection machine. Generally, the first 5 state machines complete the link aggregation control, wherein each of the Receive machine, the Periodic Transmission machine, the Mux machine, and the Transmit machine respectively has one timer for controlling state transition of these state machines. Change in the data frame transmitting-receiving functions of ports of an aggregated link is controlled by each state machine in the LACP, whereas state variation of each state machine is maintained by a timer. Therefore, in order to reduce application message loss, it is essential to set a timer duration of each state machine in the LACP.

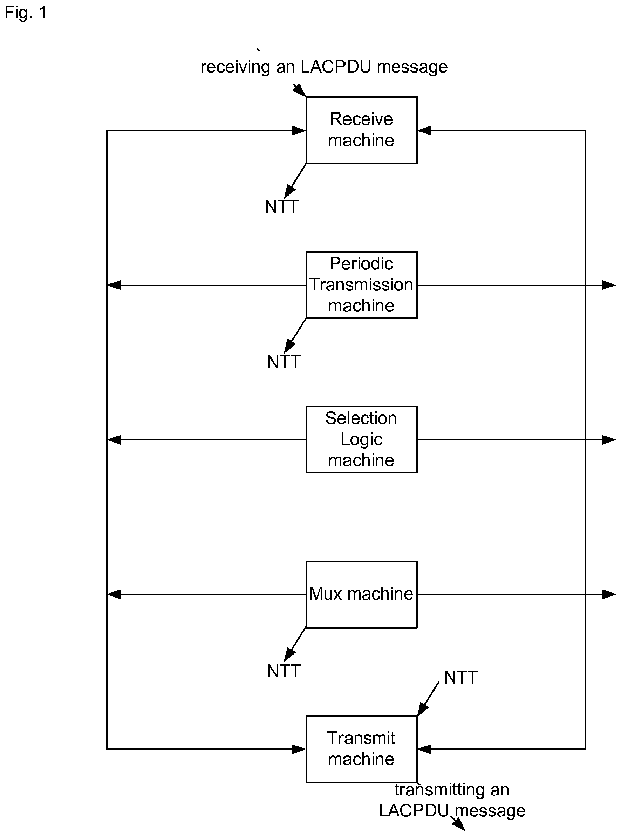

Fig. 1 is a schematic diagram of relation of respective state machines during link aggregation control in existing techniques. As shown in Fig. 1, a Receive machine is responsible for: receiving a Link Aggregation Control Protocol Data Unit (LACPDU) message sent by an opposite end, extracting port state information of the opposite end from the LACPDU for use by the other state machines; setting a timer duration, and starting timing according to the timer duration; if port state information transmitted from the opposite end is not received within the timer duration and the timer times out, providing default port state information of the opposite end for use by the other state machines, and turning off the data frame transmitting-receiving function of a port to block passage of an application message; after port state information of the opposite end is received, performing LACPDU message interaction, and turning on the data frame transmitting-receiving function of the port to allow passage of the application message after LACPDU message negotiation succeeds.

The Periodic Transmission machine is mainly configured to: determine the period with which the local end and the opposite end transmit a LACPDU message regularly, transmit regularly a LACPDU message to the opposite end to maintain link aggregation. Specifically, when the timer duration expires, the Periodic Transmission machine sets a Need To Transmit (NTT) variable of the port to be TRUE, indicating that the port has a message needing to be transmitted. Wherein, the Transmit machine is configured to be responsible for transmitting an LACPDU message to the opposite end when the NTT is TRUE, namely, when the port needs to transmit an LACPDU message, and the timer of the Transmit machine itself expires.

The Selection Logic machine is responsible for selecting the port and adding it to a suitable TRUNK, wherein this machine does not use a timer.

The Mux machine is responsible for adding the port to or deleting the port from a TRUNK selected by the Selection Logic machine, and turning on or off the data frame transmitting-receiving function of the port according to port state information of the opposite end acquired from an LACPDU message of the opposite end; when the port is in an initial state, the Mux machine turns off the data frame transmitting-receiving functions of all ports which are to be added to a TRUNK. While performing the aforementioned operations, the Mux machine sets the timer configured to wait until all ports added to a TRUNK are selected to be put into a suitable TRUNK, in which case the port is in a state that it is allowed to be added to a TRUNK. Then, the local end needs to transmit the updated port state information to the opposite end, and therefore needs to send an LACPDU message; if the timer of the Transmit machine at this moment has not timed out, then the Transmit machine can not notify the opposite end of the port state information timely. After the port is added to a TRUNK, the state of an opposite end port can be determined via the port state information in the LACPDU message transmitted by the opposite end port, and the data frame transmitting-receiving function of the port of the local end is turned on when the opposite end port is also added to the TRUNK. Therefore, if the timer of the Transmit machine has not timed out, then the port state information of the port of the local end can not be notified to the port of the opposite end timely, such that the data frame transmitting-receiving function can not be turned on simultaneously, which tends to lead to application message loss.

However, the respective timer durations of the four state machines with timers are not given explicitly in LACP, nor is the relation between the respective timer durations determined. Currently, during link aggregation control using the LACP, a respective timer duration is set by adopting empirical values or by a user. When a timer is set by a user, the port state information of one end of an aggregated link can not be notified to the opposite end timely typically due to an unreasonable setting, such that the data frame transmitting-receiving function can not be turned on simultaneously, leading to application message loss during transmission.
The article "Link Aggregation Control Protocol Protocol Participants Protocol Machines; seaman_1-1198" IEEE DRAFT; SEAMAN_1_1198, IEEE-SA, PISCATAWAY, NJ USA, (19981108), vol. 802.3, pages 1 - 11, discloses a link aggregation protocol and machines.

### SUMMARY

Accordingly, the primary objective of the present disclosure is to provide a method and a device for link aggregation, capable of achieving the objective of reducing application message loss during link aggregation in accordance with the claims.

To achieve the aforementioned objective, the technical solution of the disclosure is implemented as follows.

The disclosure provides a method for link aggregation, including:
turning off data frame transmitting-receiving functions of all ports;
when a timer of a Transmit machine expires, selecting, by a Selection Logic machine, a TRUNK for a port, setting and starting a timer of a Mux machine, and preparing, by the Mux machine, to add the port to the selected TRUNK; and
adding, by the Mux machine, the port to the selected TRUNK when the timer of the Transmit machine expire simultaneously, turning on, by the Mux machine, the data frame transmitting-receiving function of the port according to aggregation state information in a received Link Aggregation Control Protocol Data Unit (LACPDU) message, and performing, by the Mux machine, application message transmission.

The method may further include: presetting the timer of the Transmit machine, and then starting the timer of the Transmit machine after the presetting is completed; restarting the timer of the Transmit machine after the timer of the Transmit machine expires.

The method may further include: after the turning off data frame transmitting-receiving functions of all ports, setting a timer of a Receive machine and a timer of a Periodic Transmission machine, and starting the timer of the Periodic Transmission machine and the timer of the Receive machine when the timer of the Transmit machine expires.

The method may further include: after the setting and starting a timer of a Mux machine, performing LACPDU message transmission to interact port state information with a period of a timer duration of the Periodic Transmission machine.

The method may further include: while performing the application message transmission, performing LACPDU message interaction with a period of a timer duration of the Transmit machine; and when no LACPDU message is received from an opposite end after the timer of the Receive machine expires, turning off the data frame transmitting-receiving function of a local end.

The method may further include: after the turning off the data frame transmitting-receiving function of a local end, restarting the timer of the Receive machine, turning on the data frame transmitting-receiving function of the local end when an LACPDU message is received from the opposite end within a timer duration of the Receive machine; and deleting, by the Mux machine, a port of the local end from a TRUNK when no LACPDU message is received from the opposite end after the timer of the Receive machine expires.

Wherein, the timer duration of the Transmit machine may be kd; the timer duration of the Mux machine may be (dn-1)k; the timer duration of the Receive machine may be kdn; and the timer duration of the Periodic Transmission machine may be between kd and kdn, wherein k may be an integer multiple of 10ms, and d and n may be positive integers greater than 1.

The method may further include: after adding, by the Mux machine, the port to the selected TRUNK, determining whether the data frame transmitting-receiving function of the port is turned off, and turning off the data frame transmitting-receiving function of the port if the data frame transmitting-receiving function of the port is not turned off.

A device for link aggregation, including: a turning-off means configured to turn off data frame transmitting-receiving functions of all ports; an adding means configured for a Selection Logic machine to, when a timer of a Transmit machine expires, select a TRUNK for a port, configured to set and start a timer of a Mux machine, and configured for the Mux machine to prepare to add the port to the selected TRUNK; and a turning-on-and-transmitting means configured for the Mux machine to, when the timer of the Mux machine and the timer of the Transmit machine expire simultaneously, add the port to the selected TRUNK, turn on the data frame transmitting-receiving function of the port according to aggregation state information in a received Link Aggregation Control Protocol Data Unit (LACPDU) message, and perform application message transmission.

The device may further include a timed timing means configured to set a timer of a Receive machine and a timer of a Periodic Transmission machine, and start the timer of the Receive machine and the timer of the Periodic Transmission machine when the timer of the Transmit machine in the adding means expires.

By properly setting a timer duration of each state machine, the method and the device for link aggregation provided by the present disclosure ensure timely interaction of port state information of both ends in an aggregated link, implementing simultaneous turning-on of the data frame transmitting-receiving function of both ends, thereby reducing application message loss. In addition, when an abnormality of an aggregated link occurs and no LACPDU message is received from the opposite end, the data frame transmitting-receiving function of the local end is turned off timely, increasing reliability of application message transmission by the aggregated link.

### BRIEF DESCRIPTION OF THE DRAWINGS

Fig. 1 is a schematic diagram of the relation of respective state machines during link aggregation control in existing techniques;
Fig. 2 is a flowchart of a method for implementing link aggregation according to the present disclosure;
Fig. 3 is a schematic view of an embodiment of inter-switch link aggregation;
Fig. 4 is a time sequence flowchart of a method for implementing link aggregation according to the present disclosure;
Fig. 5 is a schematic diagram of the structure of a device for implementing link aggregation according to the present disclosure; and
Fig. 6 is a schematic diagram of a system for implementing link aggregation according to the present disclosure.

### DETAILED DESCRIPTION

The basic idea of the disclosure is that: the data frame transmitting-receiving functions of all ports are turned off; when a timer of a Transmit machine expires, a Selection Logic machine selects a TRUNK for a port; a timer of a Mux machine is set and started, and the Mux machine prepares to add the port to the selected TRUNK; the timer of the Mux machine and the timer of the Transmit machine expire simultaneously, the Mux machine adds the port to the selected TRUNK, turns on the data frame transmitting-receiving function of the port according to aggregation state information in a received LACPDU message, and performs application message transmission.

To clarify the objective, technical solution and advantage of the present disclosure, the present disclosure is further elaborated with reference to specific embodiments and figures.

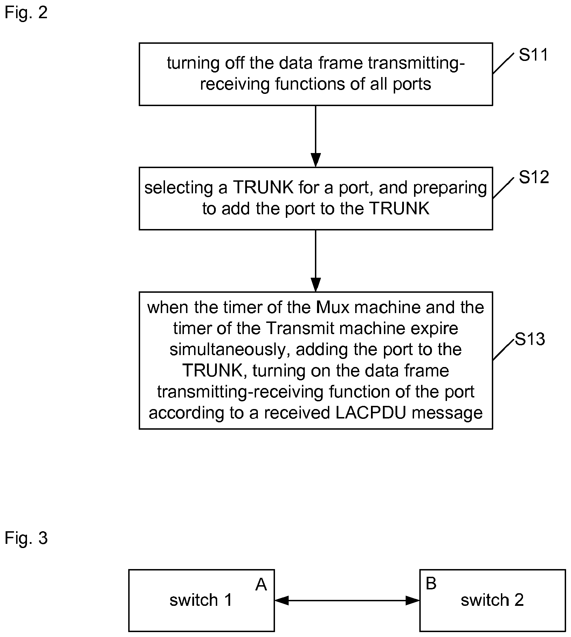

Fig. 2 shows a flowchart of a method for implementing link aggregation according to the present disclosure. As shown in Fig. 2, the method includes the following steps.

S11: The data frame transmitting-receiving functions of all ports is turned off;
in this step, the durations of timers of Transmit machines at all ports are preset and then timing is started.

S12: The timer of a Transmit machine expires, a Selection Logic machine selects a trunk for a port, the timer of a Mux machine is set and started, and the Mux machine prepares to add the port to the selected TRUNK;
in this step, during the timer duration of the Mux machine, all ports prepared to be added to the TRUNK selected by the Selection Logic machine are waited, and LACPDU message transmission is performed with a period of a timer duration of the Periodic Transmission machine according to LACP, to interact port state information.

S13: The timer of the Mux machine and the timer of the Transmit machine expire simultaneously; the Mux machine adds the port to the selected TRUNK, turns on the data frame transmitting-receiving function of the port according to aggregation state information in a received LACPDU message, and performs application message transmission;
in this step, the timers of the Mux machine and of the Transmit machine expire simultaneously, an LACPDU message including state information of being ready to be added to the TRUNK is interacted; a port is added to the TRUNK according to the LACPDU message received, and the state of the port is changed into an aggregated state; when the timer of the Transmit machine expires again, an LACPDU message including aggregation state information is interacted, and the data frame transmitting-receiving function of the port is turned on to perform application message transmission.

Fig. 3 shows an embodiment of inter-switch link aggregation. As shown in Fig. 3, there are only port A and port B on a link AB between switch 1 and switch 2. To simplify the description of the disclosure, the disclosure is explained below with an embodiment of an aggregated link of Fig. 3.

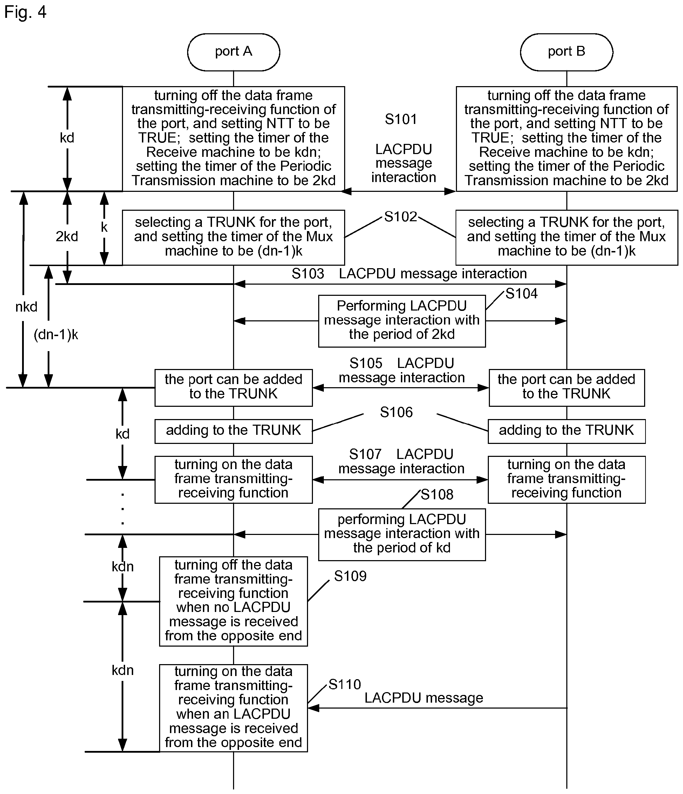

Fig. 4 shows a time sequence flowchart of a method for implementing link aggregation according to the present disclosure. As shown in Fig. 4, the method includes the following steps.

S101: The timer of the Transmit machine is preset and then started; port A and port B respectively turn off the data frame transmitting-receiving functions of their respective port, set a value of NTT to be TRUE, and set the respective timers of the Receive machine and the Periodic Transmission machine; when the timer of the Transmit machine expires, port A and port B respectively transmit their respective LACPDU messages to opposite ends to perform LACPDU message interaction.

In this step, the timer durations of the Transmit machines of port A and port B are preset, and timing is started thereafter. Preferably, the timer duration of the Transmit machine may be set to be kxd, expressed as kd (a related expression in subsequent description is similar to this expression, no further elaboration is given), wherein k is an integer multiple of 10ms, and d is a positive integer greater than 1.

Correspondingly, the timer duration of the Receive machine may be set to be kdn, so as to take full advantage of the timer duration of the Receive machine to wait for the Transmit machine at the opposite end to perform message transmission; the timer duration of the Periodic Transmission machine may be set to be between kd and kdn, preferably to be 2kd, wherein n is a positive integer greater than 1.

It is to be understood that in this step, when the timer of the Transmit machine expires, the timers of the Periodic Transmission machine and of the Receive machine start timing; and when the timers of respective state machines expire, they then restart timing without break.

S102: After ports A and B perform LACPDU message interaction, the Selection Logic machine selects a proper TRUNK for ports A and B, and at the same time sets the timer of the Mux machine.

In this step, the timer of the Mux machine may be set to be (dn-1)k; after receiving an LACPDU message from the opposite end, port A or port B complete TRUNK selection and Mux machine timer setting within a time period k, namely, the timers of the Mux machines start timing after the LACPDU message is received and a time period k lapses. Therefore, the value of k is the time needed for the Selection Logic machine to select the TRUNK for the port and to set the timer of the Mux machine.

S103 and S104: Ports A and B ready to be added to the TRUNK selected by the Selection Logic machine are waited; LACPDU message transmission is performed with a period of a timer duration of the Selection Logic machine according to LACP, to interact port state information of ports A and B, wherein the timer duration of the Selection Logic machine is 2kd.

S105: The timers of the Mux machine and the Transmit machine expire simultaneously, and an LACPDU message including state information of being ready to be added to the TRUNK is interacted.

In this step, as the timer of the Mux machine is set to be (dn-1)k, while the time taken by S102 is k, the time from restarting the timer of the Transmit machine of S101 to expiration of the timer of the Mux machine is k+(dn-1)k, that is, nkd; meanwhile the timer of the Transmit machine is set to be kd. Therefore, simultaneous expiration of the timers of the Mux machine and of the Transmit machine may be achieved.

When the timer of the Mux machine expires, the port states of ports A and B change into a state ready to be added to the TRUNK, in which case ports A and B need to transmit an LACPDU message, the timer of the Transmit machine expires simultaneously, and the port state information of ports A and B may be interacted timely via LACPDU messages.

S106: According to a receive LACPDU message, port A is added to the TRUNK, and the port state of port A changes into an aggregated state; and port B is added to the TRUNK, and the port state of port B changes into an aggregated state.

It is to be understood that the time at which ports A and B are added to the TRUNK may not necessarily be the same and there may exist a certain time difference.

This step may further include determining whether the data frame transmitting-receiving function of ports A and B is turned off, and turning off the data frame transmitting-receiving function of the ports if the function is not turned off, to further ensure blocking of the application message transmission.

S107: When the timer of the Transmit machine expires, an LACPDU message including aggregation state information is interacted, and ports A and B turn on the data frame transmitting-receiving function of the port per se respectively according to aggregation state information in an LACPDU message received respectively from opposite ends, to perform application message transmission.

As the last timing duration of the timer of the Transmit machine expires simultaneously with the timer of the Mux machine, the state information included in the LACPDU message transmitted by the timer of the Transmit machine here is the aggregation state information.

S108: While performing application message transmission, ports A and B perform LACPDU message transmission with a period of a timer duration of the Transmit machine, to interact the port state information, wherein the timer duration of the Transmit machine is kd;

S109: If port A has not received the LACPDU message from port B after the timer of the Receive machine expires, port state information of the opposite end is set to be non-aggregated state according to LACP and is then notified to the port A; the port A will turn off data frame transmitting-receiving function of the local end according to the port state information of non-aggregated state, to block application message transmission, and at the same time restart the timer of the Receive machine;
similarly, when the port B has not received the LACPDU message from the port A after the timer of the Receive machine expires, the subsequent processing is the same as mentioned above and is not further elaborated.

S110: The data frame transmitting-receiving function of the local end is turned on after the port A receives the LACPDU message from the port B within the restarted timer duration of the Receive machine.

Similarly, the data frame transmitting-receiving function of the local end is turned on after the port B receives the LACPDU message from the port A within the restarted timer duration of the Receive machine.

This step may further include that when the port A has not received the LACPDU message from the port B after the expiration of the restarted timer duration of the Receive machine, the Mux machine deletes the port A from the TRUNK. Operation of the port B is similar and is not elaborated.

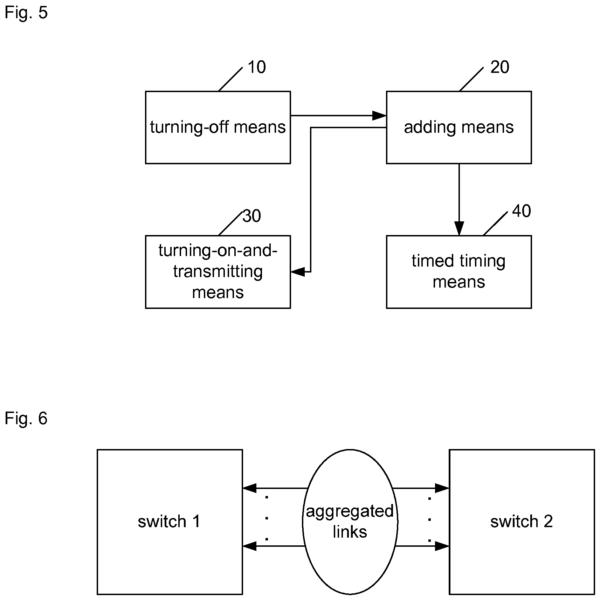

Fig. 5 shows a schematic diagram of the structure of a device for implementing link aggregation according to the present disclosure. As shown in Fig. 5, the device includes: a turning-off means 10, an adding means 20, and a turning-on-and-transmitting means 30; wherein, the turning-off means 10 is configured to turn off data frame transmitting-receiving functions of all ports; the adding means 20 is configured for a Selection Logic machine to select a TRUNK for a port when the turning-off means 10 turns off the data frame transmitting-receiving functions of all ports and a timer of a Transmit machine expires, configured to set and start a timer of a Mux machine, and configured for the Mux machine to prepare to add the port to the selected TRUNK; and the turning-on-and-transmitting means 30 is configured for the the Mux machine to, when the timer of the Mux machine and the timer of the Transmit machine expire simultaneously, add the port to the selected TRUNK, turn on the data frame transmitting-receiving function of the port according to aggregation state information in a received LACPDU message, and perform application message transmission.

The device may further include a timed timing means 40 configured to set a timer of a Receive machine and a timer of a Periodic Transmission machine, and start the timer of the Receive machine and the timer of the Periodic Transmission machine when the timer of the Transmit machine in the adding means 20 expires.

Fig. 6 shows the structure of a system for implementing link aggregation according to the present disclosure. As shown in Fig. 6, the system includes switch 1 and switch 2, wherein the switches 1 and 2 include at least one port; a Mux machine of the switch 1 or 2 turns off the port data frame transmitting-receiving function; when the timer of a Transmit machine of the switch 1 or 2 expires, an LACPDU message is transmitted to the switch 1 or 2 to select a TRUNK for a port, and the timer of the Mux machine is set and started; when the timers of the Mux machine and the Transmit machine of the switch 1 or 2 expire simultaneously, an LACPDU message including state information of being ready to be added to the TRUNK is transmitted to the switch 1 or 2; the port of the switch 1 or 2 is added to the TRUNK, and the port state is changed into an aggregated state. It is to be understood that the time at which respective ports of the switches 1 and 2 are added to the TRUNK is not necessarily the same and there may exist a certain time difference; when the timer of the Transmit machine expires, an LACPDU message including aggregation state information is transmitted to the switch 1 or 2; and after receiving the aggregation state information in the LACPDU message transmitted by the switch 2 or 1, the switch 1 or 2 turns on the data frame transmitting-receiving function of the port.

Specifically, the switch 1 or 2 is configured to set the timers of the Receive machine and of the Periodic Transmission machine, and to start the timers of the Receive machine and of the Periodic Transmission machine when the timer of the Transmit machine expires.

Furthermore, the switch 1 or 2 is specifically configured to perform LACPDU message transmission with a period of a timer duration of the Periodic Transmission machine.

Specifically, the switch 1 or 2 is configured to, while performing LACPDU message transmission, transmit an LACPDU message to the switch 2 or 1 with a period of a timer duration of the Transmit machine; and turn off the data frame transmitting-receiving function of the local end if no LACPDU message from switch 2 or 1 is received after the timer of the Transmit machine expires.

Wherein, after the switch 1 or 2 turns off the data frame transmitting-receiving function of the local end, the timer of the Receive machine is restarted; the data frame transmitting-receiving function of a port is turned on when an LACPDU message from the switch 2 or 1 is received within the timer duration of the Receive machine; the Mux machine deletes a port of the switch 1 or 2 from the TRUNK when no LACPDU message is received from switch 2 or 1 after the timer of the Receive machine expires.

Wherein the timer duration of the Transmit machine of the switch 1 or 2 is kd; the timer duration of the Mux machine is (dn-1)k; the timer duration of the Receive machine is kdn; and the timer duration of the Periodic Transmission machine is between kd and kdn, wherein k is an integer multiple of 10ms, and d and n are positive integers greater than 1.

By properly setting the timer duration of each state machine, the method, device, and system for link aggregation provided by the present disclosure ensure timely interaction of port state information of both ends in an aggregated link, implementing simultaneous turning-on of the data frame transmitting-receiving function of both ends, thereby reducing application message loss; in addition, when an abnormality of an aggregated link occurs and no LACPDU message is received from the opposite end, the data frame transmitting-receiving function of the local end is turned off timely, increasing reliability of application message transmission by the aggregated link.

The aforementioned are merely preferred embodiments of the disclosure and are not intended to limit the scope of the disclosure.

## Claims

1. A method for link aggregation, comprising:
(S11) turning off data frame transmitting-receiving functions of all ports;
(S12) when a timer of a Transmit machine expires, selecting, by a Selection Logic machine, a TRUNK for a port, setting and starting a timer of a Mux machine, and preparing, by the Mux machine, to add the port to the selected TRUNK; and
(S13) adding, by the Mux machine, the port to the selected TRUNK when the timer of the Mux machine and the timer of the Transmit machine expire simultaneously, turning on, by the Mux machine, the data frame transmitting-receiving function of the port according to aggregation state information in a received Link Aggregation Control Protocol Data Unit, LACPDU, message, and performing, by the Mux machine, application message transmission.

2. The method according to claim 1, further comprising: (S101) presetting the timer of the Transmit machine, and then starting the timer of the Transmit machine after the presetting is completed; restarting the timer of the Transmit machine after the timer of the Transmit machine expires.

3. The method according to claim 1, further comprising: (S101) after the turning off data frame transmitting-receiving functions of all ports, setting a timer of a Receive machine and a timer of a Periodic Transmission machine, and starting the timer of the Periodic Transmission machine and the timer of the Receive machine when the timer of the Transmit machine expires.

4. The method according to claim 3, further comprising: (S103) after the setting and starting a timer of a Mux machine, performing LACPDU message transmission to interact port state information with a period of a timer duration of the Periodic Transmission machine.

5. The method according to claim 3, further comprising:
(S108) while performing the application message transmission, performing LACPDU message interaction with a period of a timer duration of the Transmit machine; and
(S109) when no LACPDU message is received from an opposite end after the timer of the Receive machine expires, turning off the data frame transmitting-receiving function of a local end.

6. The method according to claim 5, further comprising: after the turning off the data frame transmitting-receiving function of a local end,
(S110) restarting the timer of the Receive machine, turning on the data frame transmitting-receiving function of the local end when an LACPDU message is received from the opposite end within a timer duration of the Receive machine; and deleting, by the Mux machine, a port of the local end from a TRUNK when no LACPDU message is received from the opposite end after the timer of the Receive machine expires.

7. The method according to any one of claims 3 to 6, wherein a timer duration of the Transmit machine is kd; a timer duration of the Mux machine is (dn-1)k; a timer duration of the Receive machine is kdn; and a timer duration of the Periodic Transmission machine is between kd and kdn, wherein k is an integer multiple of 10ms, and d and n are positive integers greater than 1.

8. The method according to any of claims 1 to 6, further comprising: after adding, by the Mux machine, the port to the selected TRUNK, determining whether the data frame transmitting-receiving function of the port is turned off, and turning off the data frame transmitting-receiving function of the port if the data frame transmitting-receiving function of the port is not turned off.

9. A device for link aggregation, comprising:
a turning-off means (10) configured to turn off data frame transmitting-receiving functions of all ports;
an adding means (20) configured for a Selection Logic machine to, when a timer of a Transmit machine expires, select a TRUNK for a port, configured to set and start a timer of a Mux machine, and configured for the Mux machine to prepare to add the port to the selected TRUNK; and
a turning-on-and-transmitting means (30) configured for the Mux machine to, when the timer of the Mux machine and the timer of the Transmit machine expire simultaneously, add the port to the selected TRUNK, turn on the data frame transmitting-receiving function of the port according to aggregation state information in a received Link Aggregation Control Protocol Data Unit, LACPDU, message, and perform application message transmission.

10. The device according to claim 9, further comprising a timed timing means (40) configured to set a timer of a Receive machine and a timer of a Periodic Transmission machine, and start the timer of the Receive machine and the timer of the Periodic Transmission machine when the timer of the Transmit machine in the adding means expires.

## Patentansprüche

1. Verfahren zur Link-Aggregation, Folgendes umfassend:
(S11) Abschalten von Daten-Frame-Übertragungs-/Empfangsfunktionen aller Ports,
(S122) wenn ein Zeitgeber einer Übertragungsmaschine abläuft, Auswählen eines TRUNK für einen Port durch eine Auswahllogikmaschine, Einstellen und Starten eines Zeitgebers einer Mux-Maschine und Vorbereiten durch die Mux-Maschine, den Port zum ausgewählten TRUNK hinzuzufügen, und
(S13) Hinzufügen des Ports zum ausgewählten TRUNK durch die Mux-Maschine, wenn der Zeitgeber der Mux-Maschine und der Zeitgeber der Übertragungsmaschine gleichzeitig ablaufen, Einschalten der Daten-Frame-Übertragungs-/Empfangsfunktion des Ports durch die Mux-Maschine gemäß Aggregationszustandsinformationen in einer empfangenen LACPDU-(Link-Aggregation-Control-Protocol-Data-Unit-)Nachricht und Ausführen einer Anwendungsnachrichtenübertragung durch die Mux-Maschine.

2. Verfahren nach Anspruch 1, ferner Folgendes umfassend: (S101) Voreinstellen des Zeitgebers der Übertragungsmaschine und danach Starten des Zeitgebers der Übertragungsmaschine, nachdem das Voreinstellen abgeschlossen ist, Neustarten des Zeitgebers der Übertragungsmaschine, nachdem der Zeitgeber der Übertragungsmaschine abläuft.

3. Verfahren nach Anspruch 1, ferner Folgendes umfassend: (S101) nach dem Abschalten der Daten-Frame-Übertragungs-/Empfangsfunktionen aller Ports, Einstellen eines Zeitgebers einer Empfangsmaschine und eines Zeitgebers einer Maschine für periodische Übertragung und Starten des Zeitgebers der Maschine für periodische Übertragung und des Zeitgebers der Empfangsmaschine, wenn der Zeitgeber der Übertragungsmaschine abläuft.

4. Verfahren nach Anspruch 3, ferner Folgendes umfassend: (S103) nach dem Einstellen und Starten eines Zeitgebers einer Mux-Maschine, Ausführen der LACPDU-Nachrichtenübertragung, um Portzustandsinformationen mit einer Periode einer Zeitgeberdauer der Maschine für periodische Übertragung zu interagieren.

5. Verfahren nach Anspruch 3, ferner Folgendes umfassend:
(S108) während des Ausführens der Anwendungsnachrichtenübertragung, Ausführen der LACPDU-Nachrichteninteraktion mit einer Periode einer Zeitgeberdauer der Übertragungsmaschine und
(S109) wenn von einem gegenüberliegenden Ende nach dem Ablaufen des Zeitgebers der Empfangsmaschine keine LACPDU-Nachricht empfangen wird, Abschalten der Daten-Frame-Übertragungs-/Empfangsfunktion eines lokalen Endes.

6. Verfahren nach Anspruch 5, ferner Folgendes umfassend: nach dem Abschalten der Daten-Frame-Übertragungs-/Empfangsfunktion eines lokalen Endes,
(S110) Neustarten des Zeitgebers der Empfangsmaschine, Anschalten der Daten-Frame-Übertragungs-/Empfangsfunktion des lokalen Endes, wenn vom gegenüberliegenden Ende innerhalb einer Zeitgeberdauer der Empfangsmaschine eine LACPDU-Nachricht empfangen wird, und Löschen eines Ports des lokalen Endes aus einem TRUNK durch die Mux-Maschine, wenn vom gegenüberliegenden Ende nach dem Ablaufen des Zeitgebers der Empfangsmaschine keine LACPDU-Nachricht empfangen wird.

7. Verfahren nach einem der Ansprüche 3 bis 6, wobei eine Zeitgeberdauer der Übertragungsmaschine kd ist, eine Zeitgeberdauer der Mux-Maschine (dn-1)k ist, eine Zeitgeberdauer der Empfangsmaschine kdn ist und eine Zeitgeberdauer der Maschine für periodische Übertragung zwischen kd und kdn liegt, wobei k ein ganzzahliges Vielfaches von 10 ms ist und d und n positive Ganzzahlen größer als 1 sind.

8. Verfahren nach einem der Ansprüche 1 bis 6, ferner Folgendes umfassend: nach dem Hinzufügen des Ports zum ausgewählten TRUNK durch die Mux-Maschine Bestimmen, ob die Daten-Frame-Übertragungs-/Empfangsfunktion des Ports abgeschaltet ist und Abschalten der Daten-Frame-Übertragungs-/Empfangsfunktion des Ports, wenn die Daten-Frame-Übertragungs-/Empfangsfunktion des Ports nicht abgeschaltet ist.

9. Vorrichtung zur Link-Aggregation, Folgendes umfassend:
ein Abschaltmittel (10), das dafür konfiguriert ist, die Daten-Frame-Übertragungs-/Empfangsfunktionen aller Ports abzuschalten,
ein Hinzufügungsmitttel (20), das dafür konfiguriert ist, für eine Auswahllogikmaschine einen TRUNK für einen Port auszuwählen, und dafür konfiguriert ist, einen Zeitgeber einer Mux-Maschine einzustellen und zu starten, und dafür konfiguriert ist, die Mux-Maschine darauf vorzubereiteten, den Port zum ausgewählten TRUNK hinzuzufügen, wenn ein Zeitgeber der Übertragungsmaschine abläuft, und
ein Anschalt- und Übertragungsmittel (30), das dafür konfiguriert ist, für die Mux-Maschine den Port zum ausgewählten TRUNK hinzuzufügen, die Daten-Frame-Übertragungs-/Empfangsfunktion des Ports gemäß Aggregationszustandsinformationen in einer empfangenen LACPDU-(Link-Aggregation-Control-Protocol-Data-Unit-)Nachricht anzuschalten und eine Anwendungsnachrichtenübertragung durchzuführen, wenn der Zeitgeber der Mux-Maschine und der Zeitgeber der Übertragungsmaschine gleichzeitig ablaufen.

10. Vorrichtung nach Anspruch 9, ferner ein zeitgesteuertes Zeitgebermittel (40) umfassend, das dafür konfiguriert ist, einen Zeitgeber einer Empfangsmaschine und einen Zeitgeber einer Maschine für periodische Übertragung einzustellen und den Zeitgeber der Empfangsmaschine und den Zeitgeber der Maschine für periodische Übertragung zu starten, wenn der Zeitgeber der Übertragungsmaschine in dem Hinzufügungsmittel abläuft.

## Revendications

1. Procédé d'agrégation de liaisons, comprenant les étapes ci-dessous consistant à :
(S11) désactiver des fonctions de transmission-réception de trames de données de tous les ports ;
(S12) lorsqu'un temporisateur d'une machine de transmission arrive à expiration, sélectionner, par le biais d'une machine de logique de sélection, une jonction (« TRUNK ») pour un port, régler et démarrer un temporisateur d'une machine de multiplexage, et préparer, par le biais de la machine de multiplexage, l'ajout du port à la jonction sélectionnée ; et
(S13) ajouter, par le biais de la machine de multiplexage, le port, à la jonction sélectionnée, lorsque le temporisateur de la machine de multiplexage et le temporisateur de la machine de transmission arrivent simultanément à expiration, activer, par le biais de la machine de multiplexage, la fonction de transmission-réception de trames de données du port, selon des informations d'état d'agrégation, dans un message d'unité de données de protocole de commande d'agrégation de liaisons, LACPDU, reçu, et mettre en oeuvre, par le biais de la machine de multiplexage, une transmission de message d'application.

2. Procédé selon la revendication 1, comprenant en outre les étapes ci-après consistant à : (S101) prérégler le temporisateur de la machine de transmission, et démarrer ensuite le temporisateur de la machine de transmission une fois le préréglage terminé ; et redémarrer le temporisateur de la machine de transmission dès lors que le temporisateur de la machine de transmission est arrivé à expiration.

3. Procédé selon la revendication 1, comprenant en outre les étapes ci-après consistant à : (S101) après avoir désactivé les fonctions de transmission-réception de trames de données de tous les ports, régler un temporisateur d'une machine de réception et un temporisateur d'une machine de transmission périodique, et démarrer le temporisateur de la machine de transmission périodique et le temporisateur de la machine de réception lorsque le temporisateur de la machine de transmission arrive à expiration.

4. Procédé selon la revendication 3, comprenant en outre l'étape ci-après consistant à : (S103) après l'étape de réglage et l'étape de démarrage d'un temporisateur d'une machine de multiplexage, mettre en oeuvre une transmission de message d'unité LACPDU pour faire interagir des informations d'état de port avec une période d'une durée de temporisateur de la machine de transmission périodique.

5. Procédé selon la revendication 3, comprenant en outre les étapes ci-dessous consistant à :
(S108) dans le cadre de la mise en oeuvre de la transmission de message d'application, mettre en oeuvre une interaction de message d'unité LACPDU avec une période d'une durée de temporisateur de la machine de transmission ; et
(S109) lorsqu'aucun message d'unité LACPDU n'est reçu en provenance d'une extrémité opposée suite à l'expiration du temporisateur de la machine de réception, désactiver la fonction de transmission-réception de trames de données d'une extrémité locale.

6. Procédé selon la revendication 5, comprenant en outre les étapes ci-dessous consistant à : après la désactivation de la fonction de transmission-réception de trames de données d'une extrémité locale :
(S110) redémarrer le temporisateur de la machine de réception, activer la fonction de transmission-réception de trames de données de l'extrémité locale lorsqu'un message d'unité LACPDU est reçu en provenance de l'extrémité opposée au cours d'une durée de temporisateur de la machine de réception ; et supprimer, par le biais de la machine de multiplexage, un port de l'extrémité locale, d'une jonction, lorsqu'aucun message d'unité LACPDU n'est reçu en provenance de l'extrémité opposée suite à l'expiration du temporisateur de la machine de réception.

7. Procédé selon l'une quelconque des revendications 3 à 6, dans lequel une durée de temporisateur de la machine de transmission est « kd » ; une durée de temporisateur de la machine de transmission est « (dn-1)k » ; une durée de temporisateur de la machine de réception est « kdn » ; et une durée de temporisateur de la machine de transmission périodique se situe entre « kd » et « kdn », où « k » est un multiple entier de 10 ms, et « d » et « n » sont des nombres entiers positifs supérieurs à 1.

8. Procédé selon l'une quelconque des revendications 1 à 6, comprenant en outre les étapes ci-après consistant à : suite à l'ajout, par la machine de multiplexage, du port, à la jonction sélectionnée, déterminer si la fonction de transmission-réception de trames de données du port est désactivée, et désactiver la fonction de transmission-réception de trames de données du port si la fonction de transmission-réception de trames de données du port n'est pas désactivée.

9. Dispositif d'agrégation de liaisons, comprenant :
un moyen de désactivation (10) configuré de manière à désactiver les fonctions de transmission-réception de trames de données de tous les ports ;
un moyen d'ajout (20) configuré, pour une machine de logique de sélection, de manière à, lorsqu'un temporisateur d'une machine de transmission arrive à expiration, sélectionner une jonction (« TRUNK ») pour un port, configuré de manière à régler et à démarrer un temporisateur d'une machine de multiplexage, et configuré de manière à préparer la machine de multiplexage à l'ajout du port à la jonction sélectionnée ; et
un moyen d'activation et de transmission (30) configuré, pour la machine de multiplexage, de manière à, lorsque le temporisateur de la machine de multiplexage et le temporisateur de la machine de transmission arrivent simultanément à expiration, ajouter le port à la jonction sélectionnée, activer la fonction de transmission-réception de trames de données du port, selon des informations d'état d'agrégation, dans un message d'unité de données de protocole de commande d'agrégation de liaisons, LACPDU, reçu, et mettre en oeuvre une transmission de message d'application.

10. Dispositif selon la revendication 9, comprenant en outre un moyen de temporisation temporisé (40) configuré de manière à régler un temporisateur d'une machine de réception et un temporisateur d'une machine de transmission périodique, et à démarrer le temporisateur de la machine de réception et le temporisateur de la machine de transmission périodique lorsque le temporisateur de la machine de transmission dans le moyen d'ajout arrive à expiration.
